# EUROPÄISCHE PATENTSCHRIFT

(11) **EP 2 519 396 B1**
(45) Veröffentlichungstag und Bekanntmachung des Hinweises auf die Patenterteilung: **28.08.2013**
(21) Anmeldenummer: 10776082.9
(22) Anmeldetag: 14.10.2010
(51) Int. Cl.: B29C 55/08, B29C 55/16, B29C 35/04

(54) **BELÜFTUNGSDÜSE SOWIE KUNSTSTOFFFOLIENRECKANLAGE MIT ZUGEHÖRIGER BELÜFTUNGSDÜSE**
VENTILATION NOZZLE AND PLASTIC FILM STRETCHING SYSTEM HAVING AN ASSOCIATED VENTILATION NOZZLE
AJUTAGE D'AÉRATION ET INSTALLATION D'ÉTIRAGE DE FEUILLE DE PLASTIQUE ÉQUIPÉE D'UN AJUTAGE D'AÉRATION

(30) Priorität: 30.12.2009 DE 102009060753
(43) Veröffentlichungstag der Anmeldung: 07.11.2012
(73) Patentinhaber: Brückner Maschinenbau GmbH & Co. Kg, 83313 Siegsdorf (DE)
(72) Erfinder: MÄTZE, Michael, 83364 Neukirchen (DE)
(74) Vertreter: Flach, Dieter Rolf Paul
(86) Internationale Anmeldenummer: PCT/EP2010/006297
(87) Internationale Veröffentlichungsnummer: WO 2011/079885

(56) Entgegenhaltungen:
- EP-A1- 2 123 427
- EP-B1- 0 907 476

## Beschreibung

Die Erfindung betrifft eine Belüftungsdüse insbesondere zur Erwärmung von bahnförmigen Materialien nach Anspruch 1 sowie eine Kunststofffolienreckanlage nach Anspruch 15.

Eine gattungsbildende Belüftungsdüse ist beispielsweise aus der EP 0 907 476 B1 bekannt geworden. Mittels dieser vorbekannten Belüftungsdüse ist es möglich ein allgemein als Behandlungsgas bezeichnetes Heiz- oder Kühlgas in eine Zuführkammer einzuleiten, von wo aus das Behandlungsgas über eine Druckausgleichskammer in eine Verteilkammer strömen kann. In der Verteilkammer herrscht ein möglichst gleichmäßiger statischer Druck, der beim Ausströmen aus der Belüftungsdüse in dynamischen Druck und damit Ausströmgeschwindigkeit umgewandelt wird. Die Gleichmäßigkeit der Ausströmgeschwindigkeit quer zur Warenbahn ist abhängig von der Gleichmäßigkeit des statischen Drucks in der Verteilkammer. Durch gleichmäßiges Ausströmen des Luft- bzw. Gasstroms kann die Materialbahn in geringem Abstand zur Belüftungsdüse quasi schwebend an dieser vorbei geführt werden.

Einer derartigen Belüftungsdüse kann gekühltes oder erwärmtes oder erhitztes Behandlungsgas zugeführt werden, je nachdem, ob die an der Belüftungsdüse vorbei geführte Bahn gekühlt, nur geringfügig erwärmt oder stärker erhitzt werden soll.

Derartige Belüftungsdüsen eignen sich von daher vor allem für Kunststoffreckanlagen, bei denen eine Warenbahn, d.h. insbesondere eine Kunststofffolienbahn sequenziell oder simultan verstreckt, thermofixiert und letztlich relaxiert werden kann. Dazu wird eine beispielsweise aus einem thermoplastischen Polymer bestehende Kunststofffolie an den seitlichen Rändern gehalten und dann in Maschinenlaufrichtung (MD-Richtung) und anschließend in Querrichtung dazu (sogenannte TD-Richtung) sequenziell oder simultan verstreckt, thermofixiert und, wie erwähnt, zum Schluss relaxiert. Diese Verfahrensschritte können in Öfen in verschiedenen Zonen sowohl in Maschinenlaufrichtung als auch in Querrichtung dazu erfolgen. Die Folie kann dabei in geeigneter Weise temperiert und durch den temperierten Luftstrom in der Schwebe entlang und quer zur Transportrichtung gehalten werden, wozu der Luftstrom aus den erwähnten Düsenkästen der Belüftungsdüse ober- und/oder unterhalb der Materialbahn, im Besonderen der Folienbahn austritt. Von daher haben diese erwähnten Belüftungsdüsen in Form der Düsenkästen an der Luftaustrittsseite die Form einer Schlitz- oder Lochdüse mit einer oder mehreren Schlitzen und/oder Austrittsöffnungen. Die Düsenausblasrichtung ist dabei in der Regel senkrecht oder mehr oder weniger schräg zur und/oder entgegen der Abzugsrichtung der Materialbahn gerichtet.

Mit derartigen Belüftungsdüsen kann zum Teil eine sehr gleichmäßige Luftausblasgeschwindigkeit über die gesamte Arbeitsbreite der Belüftungsdüse erzielt werden. Damit wird auch der Wärmeübergang über die Arbeitsbreite der zu behandelnden Materialbahn, in der Regel des zu behandelnden Kunststofffilms sehr konstant. Schließlich kann mit derartigen Belüftungsdüsen auch die Temperatur über die Arbeitsbreite der Materialbahn / des Kunststofffilms sehr konstant gehalten werden.

Vor allem im Falle von Reckanlagen treten aber durch die V-förmigen Verstreckungsbereiche der Warenbahn (im Querreckbereich und/oder bei einer Simultanreckanlage) in der Reckzone Nachteile auf:
a) durch die hohen Durchlaufgeschwindigkeiten der Warenbahn wird Schleppluft aus dem Aufheizbereich der Warenbahn in den V-förmigen Verstreckbereich geschleppt. Die Luft bzw. das Behandlungsgas im Aufheizbereich ist in der Regel heißer als im Verstreckbereich, womit in der Streckzone an den Rändern ein immer breiter werdender kälterer Bereich entsteht;
b) durch die hohen Luftgeschwindigkeiten im Aufheizbereich entstehen höhere statische Drücke an der Warenbahn als im Verstreckbereich. Durch den Überdruck dringt wärmere Luft aus der Vorheizzone in die Mitte der Streckzone, wodurch der Rand der Materialbahn bzw. der Rand des Kunststofffilms im Windschatten liegt;
c) schließlich ist ein zu reckender Kunststofffilm am Filmrand dicker (Knochenprofil) und muss von daher zur Erzielung eines verbesserten Reckvorganges und zur Verbesserung der Filmqualität besser durchwärmt werden;
d) durch Differenzgeschwindigkeiten zwischen Film und Transportein-richtung und unterschiedliche Temperatureinwirkung treten zudem Änderungen der Filmeigenschaften über die Arbeitsbreite auf, die dem Fachmann als geometrisches und charakteristisches Bowing (s. Park, O.O.; Kim, W.S.; Park, C.I.; Yang, S.-M.: Analysis of the Bowing Phenomenon in the Tenter Process of Biaxially Oriented Polypropylene Film. (2001) In: Korean Journal of Chemical Engineering. (2001) Vol. 18, Nr. 3, S. 317-321), als Schrumpfverhalten und als Änderung des E-Moduls bekannt sind.

Ein Verfahren zum Querstrecken einer Materialbahn unter Verwendung einer Belüftungsdüse ist beispielsweise auch aus der EP 1 883 525 B1 (entspricht der WO 2006/119959 A) bekannt geworden. Danach können zusätzliche Aufheizungen oder Isolierungen vorgesehen sein, um eine Kunststofffolienbahn im Allgemeinen und den Kunststofffolien-Rand im Besonderen zu erwärmen bzw. zu kühlen. Dabei wird vorgeschlagen bei einer Temperaturführung im Streckfeld mit negativen Temperaturgradienten in Laufrichtung über und/ oder unter den Randzonen thermisch isolierte Abdeckbleche einzubauen und diese so zu positionieren, dass die Luft, welche das Streckfeld bzw. die Folie temperieren soll, über Abdeckbleche hinweg strömt, so dass eine Abkühlung der Randzonen durch den Luftaustausch behindert wird. Mit Hilfe der Abdeckbleche wird der Luftstrom umgelenkt bzw. begrenzt und der Wärmeübergangskoeffizient auf die Warenbahn verändert. Im Falle einer Temperaturerhöhung können die Abdeckbleche im Mittenbereich der Folie angebracht werden, wodurch im Ergebnis gleichfalls höhere Temperaturen in den Randzonen erreicht werden.

Schließlich ist aus der WO 2006/130141 A1 zu entnehmen, dass im Falle eines biaxial orientierten Polymerfilms eine Temperierung über die Arbeitsbreite der Folie hinweg mittels Infrarotheizung vorgenommen werden kann. Hierbei wird die Warenbahn mittels Strahlungswärme direkt beheizt, was bei dünnen Folien oder speziellen Folien auf Grund der hohen Energiedichte zu Problemen führen kann.

Heizeinrichtungen zur Temperierung des Films sind dabei in vielfacher Ausgestaltung bekannt.

Aufgabe der vorliegenden Erfindung ist es demgegenüber, eine verbesserte Belüftungsdüse sowie eine Kunststofffolienreckanlege mit einer verbesserten Belüftungsdüse zu schaffen.

Die Aufgabe wird erfindungsgemäß bezüglich der Belüftungsdüse entsprechend den im Anspruch 1 und bezüglich der Kunststofffolienreckanlage entsprechend den im Anspruch 15 angegebenen Merkmalen gelöst. Vorteilhafte Ausgestaltungen der Erfindung sind in den Unteransprüchen angegeben.

Die erfindungsgemäße Belüftungsdüse weist wesentliche Vorteile gegenüber herkömmlichen Belüftungsdüsen aus.

Als eine der wesentlichen Eigenschaften im Rahmen der Erfindung zeigt sich, dass mit der Belüftungsdüse es möglich wird, ein einstellbares Temperaturprofil quer zur Warenbahn (Materialbahn und insbesondere Kunststofffolienfilm) zu schaffen, und zwar ohne dass dabei die Gleichmäßigkeit der Luftausblasgeschwindigkeit und damit des Staudrucks ober- und unterhalb der Materialbahn bzw. quer zur Materialbahn zu ändern, damit die Materialbahn auch bei nachlassendem Querzug (z. B. in einer Fixierzone oder bei dünnen Filmen und/oder bei großen Arbeitsgeschwindigkeiten) gleichmäßig plan durch die Anlage schwebt. Durch diese Maßnahmen wird letztlich eine verbesserte Eigenschaft der bearbeiteten Warenbahn und insbesondere einer Endfolieneigenschaft bezüglich Bowing sowie der Schrumpfeigenschaft und der E-Modulverteilung erreicht.

Mit der erfindungsgemäßen Belüftungsdüse kann ebenso wie bei vorbekannten Düsen ein geeigneter Luftstrom (allgemein ein geeigneter Strom eines Behandlungsgases) in gewünschter Weise über die Materialbahn hinweg (also in der Regel quer zur Abzugsrichtung der Materialbahn) so erzeugt werden, dass das Behandlungsgas in ausreichender Menge und mit einem ausreichenden Strömdruck in Richtung Materialbahn ausströmen kann. Dadurch soll weiterhin gewährleistet werden, dass die an der Luftdüse vorbeilaufende Materialbahn entsprechend geführt wird, also im Abstand der Belüftungsdüse an dieser vorbei schwebt. Dabei kann die erfindungsgemäße Belüftungsdüse, wie im Stand der Technik auch, oberhalb und/oder unterhalb der Materialbahn angeordnet werden.

Um nunmehr den Film entsprechend temperieren zu können wird in Abweichung zum Stand der Technik nicht mehr vorgeschlagen der Belüftungsdüse einen entsprechend temperierten Luftstrom oder ein entsprechend temperiertes Behandlungsgas zuzuführen, sondern in der Belüftungsdüse selbst Temperiereinrichtungen vorzusehen. Dabei handelt es sich in der Regel um Heizeinrichtungen, die es ermöglichen, das Behandlungsgas im Allgemeinen und Luft im Besonderen auf eine spezifische Temperatur zu bringen, um die vorbeilaufende Materialbahn nicht nur schwebend zu führen, sondern vor allem auch auf ein gewünschtes Temperaturniveau zu bringen.

Dabei kann die erfindungsgemäße Belüftungsdüse so aufgebaut sein, dass in der an der Belüftungsdüse vorbeigeführten Materialbahn ein regelbares Temperaturprofil sowohl in Maschinenlaufrichtung (MD-Richtung) als auch in Querrichtung dazu (TD-Richtung) erzeugt werden kann. In der Praxis wurde mittels FEM-Berechnungen (finite elements method) gezeigt, dass der Wärmeübergangskoeffizient (WÜK) am Rand der Folie, also in der Nähe der umlaufenden Kettenschienenbahn einer Reckanlage, dem Wärmeübergangskoeffizienten in der Folienmitte sehr nahe kommt.

Allerdings ist zu berücksichtigen, dass am Folienrand während des Reckvorganges der Folie, aufgrund der größeren Folienranddicke (Knochenprofil), dem Einfluss der Kettenschiene und der in der Mitte eingeschleppten Luft, andere Randbedingungen herrschen, die sich auf Grund der unterschiedlichen Streckspannungen im Material bei unterschiedlichen Materialtemperaturen teilweise in unterschiedlichen Streckverhältnissen einmal am Folienrand und zum anderen in der Folienmitte bemerkbar machen. Dies gilt auch bezüglich der Folienrandstreifenbreite. Für die Materialbahn, d.h. insbesondere für den Kunststofffilm beispielsweise im Falle einer Folienreckanlage wie aber auch für den Rand der Materialbahnen bezüglich des Kunststofffilms ergeben sich vor allem die folgenden Einflussparameter:
a) die Luft- bzw. Gasauströmgeschwindigkeit, die über den Wärmeübergangskoeffizient Einfluss auf die Temperatur der Materialbahn/Folie nimmt, oder
b) die Luft- bzw. Gastemperatur.

Die Veränderung der Temperatur ermöglicht dabei die einfachere und direktere Einflussnahme auf die behandelte Materialbahn / den Kunststofffilm.

Durch die Erfindung ist es nunmehr möglich, die Temperatur des Behandlungsgases (in der Regel Luft) über die Arbeitsbreite der Belüftungsdüse hinweg einzustellen und unterschiedlich zu regeln, um hierüber Einfluss auf die Folientemperatur über die Folienbreite hinweg nehmen zu können. Somit kann eine zu bearbeitende Materialbahn, insbesondere eine zu reckende Folienbahn in der Folienmitte mit einfachen Mitteln zielgerichtet anders temperiert werden als beispielsweise in der Nähe des Folienrandes oder insbesondere am Folienrand selbst.

Dabei kann eine gleichmäßige Luftaustrittsgeschwindigkeit über die Arbeitsbreite der Materialbahn mit einem konstanten Wärmeübergangskoeffizient und unterschiedlichen Temperaturen realisiert werden, beispielsweise mittels einer Zweikammerdüse, einer Dreikammerdüse (Vgl. DE 196 23 471 C1), einer Kontraflowdüse, einer teleskopierenden Kontraflowdüse, einer Schwebedüse oder der gleichen.

Es hat sich gezeigt, dass im Rahmen der Erfindung eine abweichende Luftgeschwindigkeit über die Arbeitsbreite von weniger als +/-2% möglich ist.

Schließlich führt die Einstellung eines unterschiedlichen Temperaturprofils über die Arbeitsbreite hinweg auch zu einer Verringerung des Auftretens unterschiedlicher Streckverhältnisse zwischen dem Folienrand und der Folienmitte der Kunststofffolienbahn. Denn unterschiedliche Temperaturbedingungen führen auf Grund der Temperaturabhängigkeit des Spannungs- Dehnungsverhaltens der Folie zu unterschiedlichen Reckverhältnissen. Damit verbunden sind die Änderungen im bowing Verhalten, den E-Modul Änderungen und dem Schrumpfverhalten der Folie.

Die Erfindung wird nachfolgend anhand von Zeichnungen näher erläutert. Dabei zeigen im einzelnen
- Figur 1:: eine schematische Draufsicht auf eine Folienreckanlage;
- Figur 2:: eine schematische Querschnittsdarstellung durch die in Figur 1 gezeigte Folienreckanlage;
- Figur 3:: eine räumliche Darstellung einer erfindungsgemäßen Belüftungsdüse (ausschnittsweise) mit einem Düsenkasten;
- Figur 4:: eine ähnliche Darstellung zu Figur 3 in quasi "durchsichtiger" Darstellung; und
- Figur 5:: eine auszugsweise Draufsicht auf das Ausführungsbeispiel nach Figuren 3 und 4 bei weggelassener Düsenwand.

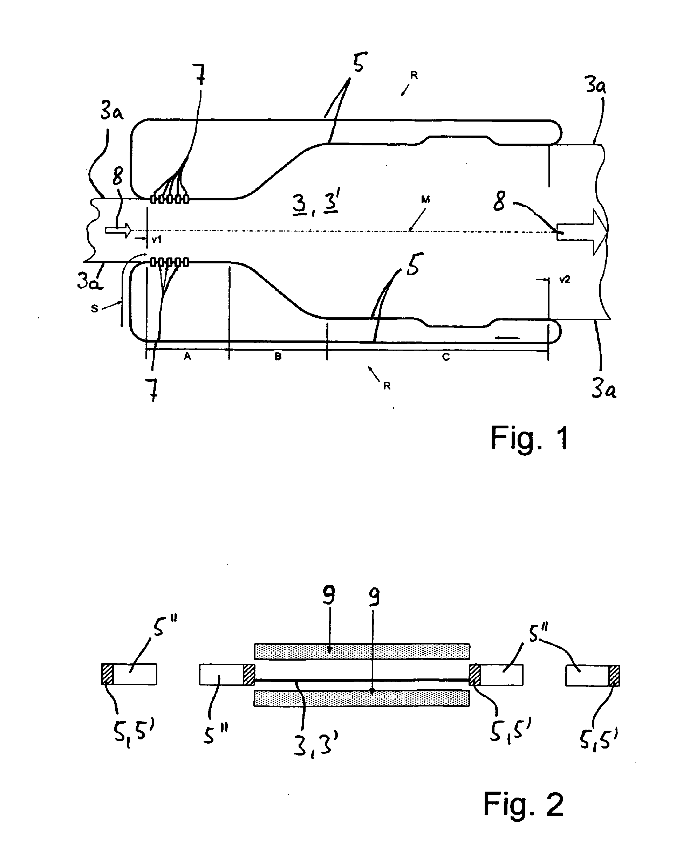

In Figur 1 ist in schematischer Weise der Grundaufbau einer Anlage zur Behandlung von bahnförmigen Materialien gezeigt, im Konkreten eine Kunststofffolien-Reckanlage gezeigt. In dieser Kunststofffolien-Reckanlage kann eine Materialbahn 3', im Konkreten ein Kunststofffilm 3 in Querrichtung sequenziell oder in Längs- und Querrichtung simultan gereckt werden.

Dazu sind zu einer mittleren Vertikal- oder Symmetrieebene M (senkrecht zur Zeichenebene in Figur 1) zwei geschlossene umlaufende Kluppenbahnen 5 vorgesehen, auf denen Kluppen 7 umlaufen können. Einige der Kluppen 7 sind in Figur 1 gezeigt. Dabei wird der Kunststofffilm von links kommend durch die Anlage hindurch befördert, wobei die umlaufenden Kluppen 7 den Film 3 am Rand 3a der Materialbahn, im Konkreten am Kunststofffolienrand 3a jeweils gegenüberliegend ergreifen und durch die Anlage hindurch bewegen. Nach der Aufheizzone A laufen dann die Kluppen in der Reckzone B V-förmig auseinander, wodurch der Film 3 bei gleichmäßiger Kluppengeschwindigkeit Quer- und bei zunehmend beschleunigten Kluppen und damit sich vergrößerndem Kluppenabstand nicht nur in Quer- sondern simultan auch in Längsrichtung gereckt wird. Nach dieser Reckzone B kann der Film in der Zone C thermofixiert werden und dabei relaxieren, wobei umlaufende Kluppenbahnenabschnitte 10 vorgesehen sein können, in denen der Querabstand zwischen den gegenüberliegenden Kluppen geringfügig größer und wieder kleiner wird, wie dies in Figur 1 nur schematisch angedeutet ist. In der Regel schließt sich an die Fixierzone C eine Kühlzone D an, in der die Warenbahn wieder auf Umgebungstemperatur abgekühlt wird.

Auf der rückwärtigen Seite laufen dann die Kluppen auf dem Wegabschnitt R von der Auslaufzone zur Einlaufzone zurück, nachdem sie an der Auslaufzone geöffnet wurden und die gereckte Materialbahn zum weiteren Abzug freigegeben wurde. Mit anderen Worten kehren die Kluppen (nachdem sie am Ende der Auslaufzone den Folienrand 3 wieder freigegeben haben) nach Durchlaufen des Rücklaufweges R zu einem sogenannten Stack-Bereich S unter Verringerung des Kluppenabstandes (in der Regel bis auf einen Wert 0) wo die Kluppen 7 in der Regel unter Berührung mit benachbarten Kluppen 7 vorgeschoben werden, bis sie wieder in den Einlaufbereich A gelangen.

An geeigneten Stellen sind bevorzugt nicht nur unterhalb sondern auch oberhalb der Materialbahn Belüftungsdüsen 9 angeordnet, wie dies in der schematischen Querschnittsdarstellung gemäß Figur 2 zu sehen ist. Zwischen diesen beiden Belüftungsdüsen 9 läuft der Kunststofffilm 3 hindurch. Derartige Belüftungsdüsen 9 sind beispielsweise bevorzugt unmittelbar vor oder zum Teil noch in der Reckzone, also im Zonenabschnitt A bzw. B vorgesehen. Sie können aber grundsätzlich auch in der in der Fixierzone C oder in der Kühlzone D angeordnet sein. Einschränkungen bezüglich der örtlichen Anordnung bestehen grundsätzlich nicht. Grundsätzlich können die Belüftungsdüsen unterhalb der Materialbahn genau an jener Position angeordnet werden, an der eine Belüftungsdüse auch oberhalb der Materialbahn positioniert wird. Grundsätzlich können aber auch die unterhalb und oberhalb der Materialbahn vorgesehenen Belüftungsdüsen in Warenbahnlaufrichtung, also in Abzugsrichtung 8 der Materialbahn versetzt zueinander angeordnet werden. Diese Anordnung kann sich dabei beliebig oft in Längsrichtung der Anlage wiederholen. Üblicherweise sind dabei die Belüftungsdüsen parallel zur Ebene E der Materialbahn angeordnet, beispielsweise in einem Abstand von 5 mm bis 300 mm gegenüber der Materialbahn, so dass die Materialbahn dadurch berührungslos durch die senkrecht oder schräg zur Düsenebene austretenden Luftstrahlen (oder des austretenden Behandlungsgases) erwärmt wird und über den Luftstrahl schwebend geführt wird.

Dabei ist aus der Darstellung gemäß Figur 2 auch zu ersehen, dass die Belüftungsdüsen 9 grundsätzlich in Parallelausrichtung zur Ebene E des Kunststofffilms 3 bzw. der Materialbahn 3' angeordnet und üblicherweise quer zur Abzugsrichtung 8, mit anderen Worten also in Maschinenlängsrichtung (MD-Richtung) und damit in Maschinenquerrichtung (TD-Richtung) angeordnet sind. Dabei sind in Figur 2 auch noch jeweils im Querschnitt die zugehörigen Abschnitte der Kluppenbahnen 5, d.h. der zugehörigen Schienen 5' gezeigt, die über entsprechende nicht näher dargestellte aber grundsätzlich bekannte Tragkonstruktionen 5" gehalten sind. Benachbart zur Folienbahn 3 ist dabei der entsprechende Schienenabschnitt 5' zu sehen, auf welchem die Kluppen den zugehörigen Kunststofffilmabschnitt 3 halten und durch die Anlage hindurch befördern und dabei recken, wobei in Figur 2 jeweils außenliegend im Querschnitt jene Schienenabschnitte 5' der umlaufenden Kluppenbahn 5 zu sehen sind, die in der Rückwegzone R liegen, auf welcher also von der Auslaufzone zur Einlaufzone die Kluppen wieder rückbewegt werden.

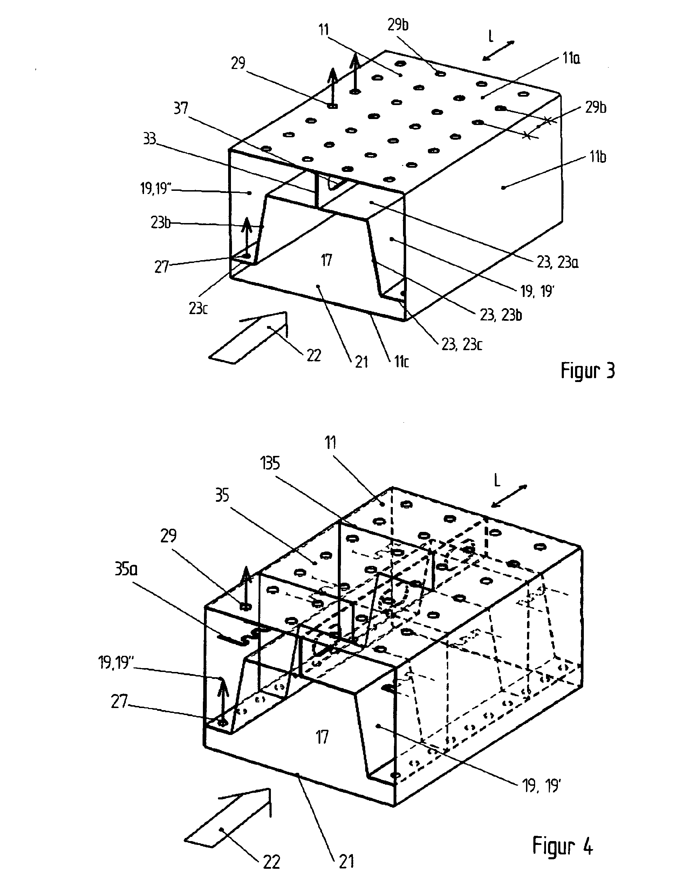

Nachfolgend wird anhand der Figuren 3 bis 5 der weitere Aufbau der erfindungsgemäßen Düse beschrieben.

Die Belüftungsdüse umfasst dabei jeweils einen Düsenkasten 11, der beispielsweise einen rechteckförmigen oder quadratischen Querschnitt quer zu dessen Längserstreckung L aufweisen kann. Dieser Düsenkasten 11 ist in der Regel quer zur Abzugsrichtung 8 der Materialbahn angeordnet, bevorzugt senkrecht zur Abzugsrichtung 8, also senkrecht zur Maschinenrichtung MD, kann aber auch schräg zur Maschinenrichtung MD angeordnet sein.

Der Düsenkasten 11 besteht vom Prinzip her aus einem Mehrkammersystem, und zwar einer ersten Kammer 17, die nachfolgend teilweise auch als Zuführkammer bezeichnet wird, sowie einem verzweigten Kammersystem 19 zur Verteilung des Luftstroms. Wie nachfolgend gezeigt wird, können dabei zwei in Längsrichtung L des Düsenkastens 11 nebeneinander verlaufende Verteilkammern 19' und 19" vorgesehen sein.

Die Belüftungsdüse weist in der Regel lediglich nur an einer, beispielsweise an der vorderen Stirnseite eine Zuführöffnung 21 zur Zuführung des Behandlungsgases in Zuführrichtung 22 auf, wobei das gegenüberliegende Stirnende der Belüftungsdüse in der Regel geschlossen ist, obgleich auch hier ebenso Behandlungsgas zuströmen könnte.

Innerhalb des im Querschnitt quadratisch oder rechteckförmigen Düsenkastens 11 ist zur Trennung der Zuführkammer von den Verteilkammern eine in Längsrichtung des Düsenkastens verlaufende Wandkonstruktion 23 vorzugsweise in Form eines gekanteten Bleches integriert eingebaut, welche im Querschnitt nach Art eines U gebildet ist und einen oberen düsenaustrittseitigen, im Abstand zu Düsenaustrittsöffnungen 27 des Düsenkastens 11 vorgesehen Wandabschnitten 23a umfasst, der in zwei seitliche, von den Düsenaustrittsöffnungen 27 weglaufende Seitenwandabschnitte 23b übergeht, an denen sich dann nach außen vorstehende Flanschabschnitte 23c anschließen.

Der Düsenkasten selbst weist eine Düsenaustrittsseite 11a auf, an die sich von den Düsen 27 weglaufend zwei parallele Außenwände 11b anschließen, die zu den Düsenaustrittsöffnungen entfernt liegend in einen geschlossenen Boden 11c übergehen.

Im gezeigten Ausführungsbeispiel sind die beiden Flanschabschnitte 23c der inneren Wandkonstruktion 23 mit der Innenseite der Seitenwandabschnitte 11b des Düsenkastens 11 fest verbunden.

Da die Wandkonstruktion 23 von den Seitenwänden 21b und der Düsenaustrittswand 11a beabstandet ist, entsteht neben der erwähnten Zuführkammer 17 zwischen der Wandkonstruktion 23 und den Seitenwänden 23b bzw. der Düsenaustrittswand 11a und 11b des Düsenkastens 11 die erwähnte Verteilkammer-Anordnung.

Im gezeigten Ausführungsbeispiel wird über die zumindest eine stirnseitige Zuführöffnung 21 Behandlungsgas zugeführt, welches dann durch eine Vielzahl von Durchtrittsöffnungen 27 (z.B. in Form von Schlitzen und/oder Löchern und/oder Langlöchern) in der inneren Wandkonstruktion 23, im gezeigten Ausführungsbeispiel in den beiden außenliegenden Flanschabschnitten 23c vorzugsweise über die gesamte oder überwiegende Länge des Düsenkastens in die in den Düsenaustrittsöffnungen näher liegende Verteilkammer 19 überströmen kann. Dadurch wird das in Längsrichtung L der Düse und damit quer zur Maschinenlaufrichtung strömende Behandlungsgas um 90**°** umgelenkt und strömt senkrecht zur Materialbahn bzw. Düsenaustrittsfläche 11a nach oben. Dadurch wird ein Druckausgleich zwischen Zuführ- und Verteilkammer erzeugt.

Schließlich kann das Behandlungsgas von dieser Verteilkammer 19 durch die Vielzahl der erwähnten Düsenaustrittsöffnungen 29 in der Düsenaustrittswand 11a senkrecht oder schräg in oder entgegen der Richtung Materialbahn 3 und senkrecht zur Düsenlängsrichtung L austreten. Im gezeigten Ausführungsbeispiel sind dabei vier Reihen 29a von Düsenaustrittsöffnungen 29 vorgesehen, die in bestimmten Abständen 29b in Längsrichtung des Düsenkastens verlaufend angeordnet sind. Anzahl und Anordnung sowie Größe der Düsenaustrittsöffnungen kann in weiten Bereichen beliebig gewählt werden. Es können auch schlitzförmige, länger dimensionierte Düsenaustrittsöffnungen sein oder Kombinationen aus unterschiedlich gebildeten Austrittsöffnungen.

Wie aus dem Ausführungsbeispiel auch noch zu ersehen ist, ist in der mittleren vertikalen Symmetrieebene S (die in Längsrichtung durch den Düsenkasten verläuft) eine Zwischen- oder Trennwand 33 zwischen der oberen Innenwand 23a der inneren Wandkonstruktion 23 und der Düsenaustrittswand 11a vorgesehen, wodurch eine linke und eine rechte Verteilkammer 19', 19" gebildet ist, die im gezeigten Ausführungsbeispiel symmetrisch zu der vertikalen Mittellängssymmetrieebene S angeordnet sind. Die Zwischen- oder Trennwand kann bei Bedarf mit Löchern oder anders dimensionierten Öffnungen versehen sein, um einen Druckausgleich zwischen den beiden Verteilkammern 19' und 19" zu erzielen.

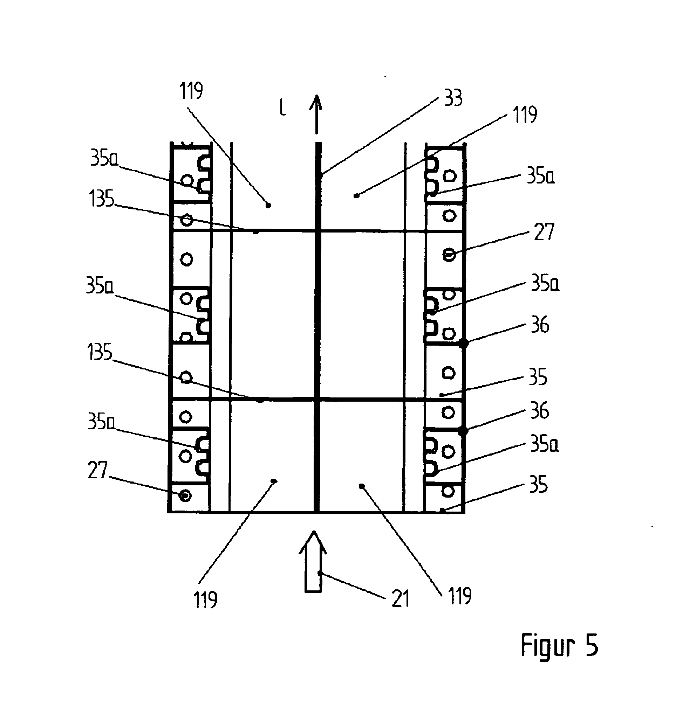

Um die verbesserte Temperierung einer zu behandelnden Materialbahn zu realisieren, sind nunmehr in Längsrichtung des Düsenkastens und damit in Längsrichtung L der Belüftungsdüse Temperier-Abschnitte 35 vorgesehen, wie dies insbesondere in den Figuren 4 und 5 zu ersehen ist (wobei Figur 4 eine entsprechende Darstellung zu Figur 3 in räumlicher Darstellung wiedergibt, allerdings bei teilweise weggelassenen äußeren Seitenwandabschnitten 11b und 11a des Düstenkastens und in Figur 5 eine schematische Draufsicht auf den erfindungsgemäßen Düsenkasten bei abgenommener oberer Düsenöffnungswand 11a gezeigt ist). In diesen Temperier-Abschnitten 35 sind beispielsweise Heizeinrichtungen 35a eingebaut die bevorzugt in gleicher Höhenlage, d.h. gleichem Abstand zur oberen Düsenaustrittswand 11a angeordnet sind. Wie dabei insbesondere aus der schematischen Draufsicht gemäß Figur 5 zu entnehmen ist, kann jede Temperierzone, also jeder Temperier-Abschnitt 35 durch in Längsrichtung L des Düsenkastens versetzt angeordnete und quer zur Längsrichtung L verlaufende Trennwandabschnitte 135 von einer benachbarten Temperier-Zone 35 komplett oder zum Teil getrennt werden. Im gezeigten Ausführungsbeispiel ist auch der bereits erwähnte in der gesamten Länge des Düsenkastens verlaufende obere Zwischen- oder Trennwandabschnitt 33 vorgesehen, so dass unter dieser Ausbildung in Längsrichtung des Düsenkastens jeweils links und rechts zur vertikalen Symmetrieebene S des Düsenkastens versetzt liegend zwei getrennte Temperier-Zonen 35 mit jeweils integrierten Heizeinrichtungen 35a gebildet sind. Würde die in Längsrichtung des Düsenkastens verlaufende Zwischen- oder Trennwand 33 weggelassen oder mit Druckausgleichsöffnungen 37 werden, würde jeweils eine zusammenhängende Temperierzone pro in Längsrichtung verlaufenden Abschnitt des Düsenkastens gebildet sein, in der dann beispielsweise nur eine oder, wie in Figur 5 angedeutet, gleichwohl zumindest zwei Heizeinrichtungen 35a untergebracht sind. Die Heizeinrichtungen können dabei aus elektrischen Heizschleifen 35'a bestehen, die durch entsprechende Anschlussstellen 36 mit nicht näher gezeigten elektrischen versorgungsleitungen verbunden sind. Es sind auch andere Beheizungsarten wie Gasbrenner oder Dampf- oder Ölwärme- tauscher denkbar.

Somit wird also über die Lufteinströmseite 21 oder an beiden gegenüberliegenden Lufteinströmseiten 21 an beiden Düsenden ein Gas- oder Luftstrom (der beheizt oder unbeheizt oder gar gekühlt sein kann) in den Düsenkasten, d.h. in die untere Zuführkammer 17 eingeleitet, wo er gleichmäßig über die gesamte Düsenbreite über die seitlich vorgesehenen Durchtrittsöffnungen 27 in die obere Verteilkammer-Anordnung 19 einströmen kann.

Aus Figur 4 ist auch zu ersehen, dass die Trennwände oder Trennbleche 135 in Längsrichtung des Düsenkastens 11 voneinander beabstandet in den Verteilkammern 19 angeordnet sind, wodurch in Längsrichtung des Düsenkastens voneinander getrennte Verteilkammern erzeugt werden, in denen der entsprechende Luftstrom über die Zuführkammer 17 nur von unten her über die in den Flanschabschnitten 23c vorgesehene Durchtrittsöffnung 27 in die jeweilige Verteilkammer 19' bzw. 19" einströmen und über die entsprechenden, dieser Kammer zugeordneten Düsenaustrittsöffnungen 29 ausströmen. Unter Verwendung der erwähnten in Längsrichtung des Düsenkastens verlaufenden Zwischenwand 33 werden dadurch links und rechts zur vertikalen Symmetrieebene S eine Vielzahl von einzelnen, vom Behandlungsgas durchströmten Verteilkanälen 119 gebildet, die jeweils mit separaten Heizeinrichtungen versehen sind. In diesen Abschnitten kann also das durchströmende Behandlungsgas durch die separaten Temperiereinrichtungen 35a gegebenenfalls unterschiedlich oder leicht unterschiedlich erwärmt werden, um unterschiedliche Abschnitte der zu behandelnden Materialbahn, insbesondere des Kunststofffilms unterschiedlich stark aufzuheizen. Dabei wird durch die erwähnten Trennwände oder Trennbleche 135 eine Durchmischung des Behandlungsgases im oberen Teil der Düse verhindert, um die gezielte abschnittsweise, separat regelbare Aufwärmung der Materialbahn 3 im Allgemeinen und der Kunststofffolienbahn 3 im Besonderen vornehmen zu können.

Die Temperatur des durch die Belüftungsdüse hindurchströmenden Behandlungsgases kann dabei in den einzelnen Zonen 35 über eine direkte oder indirekte Messung geregelt werden. Eine indirekte Temperaturmessung ist beispielsweise durch die Messung der Oberflächentemperatur der Heizschleifen oder Heizstäbe 35'a möglich. Auch andere Messtemperaturen können grundsätzlich eingesetzt werden. In Abhängigkeit der so gewonnenen Messtemperaturen kann dann gezielt die Heizsteuerung für die einzelnen Temperier-Zonen 35 vorgenommen werden.

Bei Bedarf kann auch die erwähnte mittlere, in Längsrichtung des Düsenkastens verlaufende Zwischen-Trennwand 33 weggelassen werden oder mit Druckausgleichsöffnungen 37 versehen werden, so dass in Längsrichtung des Düsenkastens versetzt liegend jeweils in Querrichtung des Düsenkastens zusammenhängende Verteilkammern gebildet sind.

Die Einteilung der einzelnen Verteilkammern 19 in Längsrichtung des Düsenkastens 11 kann in weiten Grenzen unterschiedlich vorgenommen werden. Bevorzugt werden die einzelnen regelbaren Temperierabschnitte und -zonen 35 so gewählt werden, dass sie in Längsrichtung der Belüftungsdüse eine Länge von beispielsweise 50 mm bis 500 mm aufweisen, wobei die Temperierabschnitte über die Düsenkastenlänge gleichmäßig lang als auch unterschiedlich lang gewählt werden können.

Dadurch ist es vor allem auch möglich den Folienrand (der in der Regel dicker ist als der verbleibende Folienbahnabschnitt) mit einer unterschiedlich einstellbaren Temperatur zu regeln, als andere Folienbahnabschnitte. Dadurch können beispielsweise auch separate Randheizungen wegfallen, wie sie bei anderen Reckanlagen teilweise notwendig oder sinnvoll sind. Insbesondere auch bei Folienreckanlagen mit mittels Linearmotoren angetriebenen Kluppen können separate Randheizungen bei Verwendung der vorstehend erläuterten erfindungsgemäßen Belüftungsdüse wegfallen.

Die erfindungsgemäße Düse kann an verschiedenen Stellen einer Behandlungsanlage eingesetzt werden. Dabei kann eine derartige Belüftungsdüse beispielsweise auch als Vorheizdüse verwendet werden, wobei in diesem Falle die einzelnen Trennwände 135 wegfallen können und eine durchgängige Heizung im Inneren des Düsenkörpers vorgesehen sein kann. Dabei kann eine durchgängige Heizung auf der linken wie auf der rechten Seite der vertikalen Längssymmetrieebene des Düsenkastens vorgesehen sein.

Die erfindungsgemäße Lösung zeichnet sich auch dadurch aus, dass nur ein geringer zusätzlicher elektrischer Energieeinsatz für die Temperaturzonen notwendig ist, da die Erwärmung in den Regelbereichen nur von einer Grundlufttemperatur auf ein jeweils benötigtes höheres Niveau erfolgen muss. Mit anderen Worten kann entsprechend vorgeheizte Luft oder allgemein vorgeheiztes Behandlungsgas beispielsweise mit einer Temperatur von 150°C (beispielsweise im Falle von Polypropylenfolien) mittels der erfindungsgemäßen Temperiereinrichtung in die Belüftungsdüse auf ein ca. 5° Kelvin höheres Niveau von 155 °C erfolgen.

Durch die gegebenenfalls unterschiedlich aufgeheizte Temperatur des Behandlungsgases ist ein direkter Einfluss auf die Filmtemperatur über die Arbeitsbreite der Folienbahn im Besonderen und der verwendeten und zu bearbeitenden Materialbahn im Allgemeinen möglich.

Abweichend vom gezeigten Ausführungsbeispiel ist es grundsätzlich auch möglich, teleskopierende Schlitzdüsen mit einzelnen Heizzonen zu verwenden. Durch derartige Maßnahmen kann der Einfluss der Temperatur des Behandlungsgases auf die Temperatur der Materialbahn (insbesondere des Kunststofffilms) durch eine Verringerung des Abstandes zur Materialbahn noch erheblich verstärkt werden, so dass ein gezielter punktueller Einsatz in der Aufheiz-, Streck-, Fixier- und oder Kühlzone möglich ist.

Schließlich soll der Vollständigkeit halber auch noch erwähnt werden, dass selbst in der Zuführkammer 17 eine bevorzugte gemeinsame Heiz- und/oder Temperiereinrichtung vorgesehen sein kann, um das einströmende Behandlungsgas insgesamt zu erwärmen, bevor es über die entsprechenden Durchzugsöffnungen 27 in die Verteilkammern strömt.

Die erfindungsgemäße Belüftungsdüse ist so aufgebaut und/oder in einer Anlage so ausrichtbar und/oder montierbar, dass das Behandlungsgas
- senkrecht zur Material- oder Warenbahn,
- schräg und/oder parallel in Richtung der Material- oder Warenbahn und/oder schräg und/oder parallel entgegen
der Richtung und/oder der Abzugsrichtung der Material- bzw Warenbahn

### ausströmen kann.

Durch das erläuterte Ausführungsbeispiel ist nunmehr ersichtlich, dass es im Rahmen der Erfindung möglich ist, die Temperatur des Behandlungsgases (in der Regel Luft) über die Arbeitsbreite der Belüftungsdüse hinweg einzustellen und unterschiedlich zu regeln, um hierüber Einfluss auf die Folientemperatur über die Folienbreite hinweg nehmen zu können. Mit anderen Worten sind also in Längsrichtung L der Belüftungsdüse 9 mehrere Temperier-Abschnitte 35 vorgesehen, worüber die Temperatur des Behandlungsgases und damit die Folientemperatur über die Breite der Materialbahn 3 hinweg unterschiedlich einstellbar ist. Dadurch kann eine zu bearbeitende Materialbahn, insbesondere eine zu reckende Folienbahn, in der Folienmitte mit einfachen Mitteln zielgerichtet anders temperiert werden, als beispielsweise in der Nähe des Folienrandes oder insbesondere am Folienrand selbst.

Dabei kann die erfindungsgemäße Belüftungsdüse so aufgebaut sein, dass in der an der Belüftungsdüse vorbei geführten Materialbahn ein regelbares Temperaturprofil sowohl in Maschinenlaufrichtung (MD-Richtung) als auch in Querrichtung dazu (TD-Richtung) erzeugt werden kann. Mit anderen Worten kann neben einer Temperaturregelung über die Breite der Materialbahn hinweg auch eine Temperaturregelung in Maschinenlaufrichtung erzeugt werden (wenn nämlich die Temperatur des Behandlungsgases in den beiden in Maschinenlaufrichtung versetzt zueinander liegenden Verteilkammer-Anordnungen 19', 19" unterschiedlich eingestellt wird).

Wie bereits erwähnt, kann eine für die Temperier-Abschnitte 35 vorgesehene Heizeinrichtung beispielsweise in Form von separaten Heizeinrichtungen 35a aufgebaut sein, so dass die mehreren Temperier-Abschnitte 35 jeweils mit einer separaten Heizeinrichtung 35a ausgestattet sein können.

## Patentansprüche

1. Belüftungsdüse, insbesondere zur Erwärmung von bahnförmigen Materialien (3), wobei sich die Belüftungsdüse (9) in Betriebsstellung in ihrer Längsrichtung quer zur Abzugsrichtung (8) der Materialbahn (3) erstreckt, mit zumindest einer Zuführkammer (17) zur Versorgung der Belüftungsdüse (9) mit einem Behandlungsgas und mit einer mit der Zuführkammer (17) über zumindest eine Überströmanordnung in Verbindung stehende Verteilkammeranordnung (19), von der aus das Behandlungsgas über eine oder mehrere in Längsrichtung der Belüftungsdüse (9) vorgesehene Düsenaustrittsöffnung (29) mit Quer zur Längsrichtung (L) der Belüftungsdüse (9) verlaufende Strömungsrichtung über die Breite der Materialbahn 3 hinweg ausströmen kann, **dadurch gekennzeichnet, dass** in der Belüftungsdüse (9) zumindest ein sich in Längsrichtung (L) der Belüftungsdüse erstreckender Temperier-Abschnitt (35) mit einer integrierten Heizeinrichtung (35a) vorgesehen ist, und dass in Längsrichtung (L) der Belüftungsdüse (9) mehrere Temperier-Abschnitte (35) vorgesehen sind, worüber die Temperatur des Behandlungsgases und damit die Folientemperatur über die Breite der Materialbahn (3) hinweg unterschiedlich einstellbar ist.

2. Belüftungsdüse nach Anspruch 1, **dadurch gekennzeichnet, dass** in Längsrichtung (L) der Belüftungsdüse (9) mehrere Temperier-Abschnitte (35) vorgesehen sind, die jeweils mit separaten Heizeinrichtungen (35a) ausgestattet sind.

3. Belüftungsdüse nach Anspruch 1 oder 2, **dadurch gekennzeichnet, dass** die in Längsrichtung (L) der Belüftungsdüse (9) versetzt zueinander angeordneten Temperier-Abschnitte (35) durch quer zur Längsrichtung (L) der Belüftungsdüse (9) ausgerichtete Trennwände (135) voneinander getrennt sind, durch die separate Strömungskanäle (119) gebildet sind, worüber das Behandlungsgas von einer Zuführkammer (17) über die Überströmanordnung in die einzelnen die Strömungskanäle (119) bildenden Temperier-Abschnitte (35) einströmen und hierüber über die nachgeordneten Düsenaustrittsöffnungen (29) aus der Belüfungsdüse (9) austreten kann.

4. Belüftungsdüse nach einem der Ansprüche 1 bis 3, **dadurch gekennzeichnet, dass** die Länge der Temperier-Abschnitte (35) 50 mm bis 1000 mm beträgt.

5. Belüftungsdüse nach einem der Ansprüche 1 bis 4, **dadurch gekennzeichnet, dass** der zumindest eine Temperier-Abschnitt (35) und die vorzugsweise mehreren Temperier-Abschnitte (35) im Bereich der Verteilkammer-Anordnung (19) vorgesehen sind.

6. Belüftungsdüse nach einem der Ansprüche 1 bis 5, **dadurch gekennzeichnet, dass** in Längsrichtung (L) der Belüftungsdüse (9) im Bereich der Verteilkammer-Anordnung (19) zumindest eine Zwischen- oder Trennwand (33) vorgesehen ist, wodurch quer zur Längsrichtung (L) der Belüftungsdüse (9) zumindest eine erste Verteilkammer-Anordnung (19') und eine daneben angeordnete, ebenfalls in Längsrichtung (L) der Belüftungsdüse (9) verlaufende zweite Verteilkammer-Anordnung (19") gebildet ist.

7. Belüftungsdüse nach einem der Ansprüche 1 bis 6, **dadurch gekennzeichnet, dass** die Überströmanordnung zwischen der Zuführkammer (17) und der zumindest einen Verteilkammer (19) eine Vielzahl von Durchtrittsöffnungen (27) aufweist, worüber das Behandlungsgas von der Zuführkammer (17) in die zumindest eine Verteilkammer (19) strömen kann.

8. Belüftungsdüse nach einem der Ansprüche 1 bis 7, **dadurch gekennzeichnet, dass** durch die in Längsrichtung (L) der Belüftungsdüse (9) verlaufende Zwischen- oder Trennwand (33) und durch die quer dazu verlaufenden Trennwände (135) 2n kanalförmige Verteilkammern (19, 119) gebildet sind, in denen jeweils separate Heizeinrichtungen (35a) untergebracht sind, wobei n eine ganze natürliche Zahl >0 ist.

9. Belüftungsdüse nach einem der Ansprüche 1 bis 8, **dadurch gekennzeichnet, dass** die eine oder die mehreren Heizeinrichtungen (35a) Heizschleifen oder Heizstäbe (35'a) umfassen oder daraus bestehen.

10. Belüftungsdüse nach einem der Ansprüche 1 bis 9, **dadurch gekennzeichnet, dass** die eine oder die mehreren Heizeinrichtungen (35a) mit verschiedenen Heizungsarten wie Gas, Elektrisch, Thermalöl oder Dampf beheizt werden können.

11. Belüftungsdüse nach einem der Ansprüche 1 bis 10, **dadurch gekennzeichnet, dass** das Behandlungsgas senkrecht zur Materialbahn ausströmen kann.

12. Belüftungsdüse nach einem der Ansprüche 1 bis 11, **dadurch gekennzeichnet, dass** das Behandlungsgas schräg und/oder parallel in Richtung der Materialbahn ausströmen kann.

13. Belüftungsdüse nach einem der Ansprüche 1 bis 12, **dadurch gekennzeichnet, dass** das Behandlungsgas schräg und/oder parallel entgegen der Richtung der Materialbahn ausströmen kann.

14. Belüftungsdüse nach einem der Ansprüche 1 bis 13, **dadurch gekennzeichnet, dass** mittels der Belüftungsdüse die Luftausblasgeschwindigkeit und/oder der Staudruck ober- und/oder unterhalb einer Materialbahn durch mehrere in der Belüftungszone vorgesehene regelbare Temperier-Abschnitte (35) im Sinne einer Verringerung von Abweichungen, wie Bowing, Schrumpf und E-Modul, zueinander einstell- und/oder regelbar ist.

15. Kunststofffolienreckanlage mit einer Belüftungsdüse nach einem der Ansprüche 1 bis 14.

## Claims

1. Ventilation nozzle, more particularly for heating web-shaped materials (3), the ventilation nozzle (9) extending in its longitudinal direction transverse to the withdrawal direction (8) of the material web (3) in the operating position, comprising at least one supply chamber (17) for supplying the ventilation nozzle (9) with a treatment gas, and comprising a distribution chamber arrangement (19) which is connected to the supply chamber (17) via at least one overflow arrangement, out of which the treatment gas can flow over the entire width of the material web (3) in a flow direction extending transverse to the longitudinal direction (L) of the ventilation nozzle (9) via one or more nozzle outlet openings (29) provided in the longitudinal direction of the ventilation nozzle (9), **characterised in that** at least one temperature-regulating portion (35) extending in the longitudinal direction (L) of the ventilation nozzle and comprising an integrated heating means (35a) is provided in the ventilation nozzle (9), and **in that** a plurality of temperature-regulating portions (35) are provided in the longitudinal direction (L) of the ventilation nozzle (9), via which portions the temperature of the treatment gas and thus the film temperature over the entire width of the material web (3) can be set differently.

2. Ventilation nozzle according to claim 1, **characterised in that** a plurality of temperature-regulating portions (35) are provided in the longitudinal direction (L) of the ventilation nozzle (9) and are each equipped with separate heating means (35a).

3. Ventilation nozzle according to either claim 1 or claim 2, **characterised in that** the temperature-regulating portions (35) which are arranged so as to be mutually offset in the longitudinal direction (L) of the ventilation nozzle (9) are separated from one another by dividing walls (135) which are oriented transverse to the longitudinal direction (L) of the ventilation nozzle (9), through which walls separate flow channels (119) are formed, via which the treatment gas can flow in from a supply chamber (17) via the overflow arrangement and into the individual temperature-regulating portions (35) forming the flow channels (119), and can exit the ventilation nozzle (9) via the downstream nozzle outlet openings (29).

4. Ventilation nozzle according to any of claims 1 to 3, **characterised in that** the length of the temperature-regulating portions (35) is 50 mm to 1000 mm.

5. Ventilation nozzle according to any of claims 1 to 4, **characterised in that** the at least one temperature-regulating portion (35) and preferably the plurality of temperature-regulating portions (35) are provided in the region of distribution chamber arrangement (19).

6. Ventilation nozzle according to any of claims 1 to 5, **characterised in that** at least one intermediate or dividing wall (33) is provided in the region of the distribution chamber arrangement (19) in the longitudinal direction (L) of the ventilation nozzle (9), whereby at least one first distribution chamber arrangement (19') and one second distribution chamber arrangement (19") arranged therebeside and likewise extending in the longitudinal direction (L) of the ventilation nozzle (9) are formed transverse to the longitudinal direction (L) of the ventilation nozzle (9).

7. Ventilation nozzle according to any of claims 1 to 6, **characterised in that** the overflow arrangement comprises a plurality of through-openings (27) between the supply chamber (17) and the at least one distribution chamber (19), via which through-openings the treatment gas can flow from the supply chamber (17) into the at least one distribution chamber (19).

8. Ventilation nozzle according to any of claims 1 to 7, **characterised in that** 2n channel-shaped distribution chambers (19, 119) are formed by the intermediate or dividing wall (33) extending in the longitudinal direction (L) of the ventilation nozzle (9) and by the dividing walls (135) extending transverse thereto, in each of which chambers separate heating means (35a) are housed, n being a natural number > 0.

9. Ventilation nozzle according to any of claims 1 to 8, **characterised in that** the one or more heating means (35a) comprise or consist of heating loops or heating rods (35'a).

10. Ventilation nozzle according to any of claims 1 to 9, **characterised in that** the one or more heating means (35a) may be heated using various types of heating such as gas, electricity, thermal oil or steam.

11. Ventilation nozzle according to any of claims 1 to 10, **characterised in that** the treatment gas can flow out perpendicular to the material web.

12. Ventilation nozzle according to any of claims 1 to 11, **characterised in that** the treatment gas can flow out obliquely and/or in a parallel manner towards the material web.

13. Ventilation nozzle according to any of claims 1 to 12, **characterised in that** the treatment gas can flow out obliquely and/or in a parallel manner in the opposite direction to the material web.

14. Ventilation nozzle according to any of claims 1 to 13, **characterised in that**, by means of the ventilation nozzle, the air exit speed and/or the dynamic pressure above and/or below a material web can be set and/or regulated relative to one another by a plurality of temperature-regulating portions (35) provided in the ventilation region for reducing abnormalities, such as bowing, shrinkage and modulus of elasticity.

15. Plastics film stretching system, comprising a ventilation nozzle according to any of claims 1 to 14.

## Revendications

1. Buse de soufflage, en particulier pour réchauffer des matériaux en forme de nappe (3), ladite buse de soufflage (9) s'étendant, en situation de fonctionnement, de sorte que sa direction longitudinale est perpendiculaire à la direction d'entraînement (8) de la nappe de matériau (3), comprenant au moins une chambre d'admission (17) pour l'alimentation de la buse de soufflage (9) avec un gaz de traitement, et comprenant un agencement formant chambre de répartition (19) qui communique avec la chambre d'admission (17) via au moins un agencement de déversement, chambre de répartition depuis laquelle le gaz de traitement est capable de s'écouler via une ou plusieurs ouvertures de sortie de buse (29) prévues en direction longitudinale de la buse de soufflage (9) avec une direction d'écoulement perpendiculaire à la direction longitudinale (L) de la buse de soufflage (9) et sur toute la largeur de la nappe de matériau (3),
**caractérisée en ce qu'**il est prévu dans la buse de soufflage (9) au moins un tronçon de températion (35) s'étendant en direction longitudinale (L) de la buse de soufflage avec un organe de chauffage intégré (35a), et **en ce que** dans la direction longitudinale (L) de la buse de soufflage (9) il est prévu plusieurs tronçons de températion (35) au moyen desquels la température du gaz de traitement et ainsi la température de la nappe est susceptible d'être réglée de façon différente sur toute la largeur de la nappe de matériau (3).

2. Buse de soufflage selon la revendication 1, **caractérisé en ce que** dans la direction longitudinale (L) de la buse de soufflage (9) il est prévu plusieurs tronçons de températion (35) qui sont respectivement équipés d'organes de chauffage séparés (35a).

3. Buse de soufflage selon la revendication 1 ou 2, **caractérisé en ce que** les tronçons de températion (35) agencés en décalage les uns par rapport aux autres en direction longitudinale (L) de la buse de soufflage (9) sont séparés les uns des autres par des parois de séparation (135) orientées perpendiculairement à la direction longitudinale (L) de la buse de soufflage (9), parois au moyen desquelles des canaux d'écoulement séparés (119) sont formés, via lesquels le gaz de traitement est capable de s'écouler en entrant dans les tronçons de températion individuels (35) formant les canaux d'écoulement (119) et est capable de s'écouler en sortant de la buse de soufflage (9) via ces canaux à travers les ouvertures de sortie de buse (29) situées en aval.

4. Buse de soufflage selon l'une des revendications 1 à 3, **caractérisée en ce que** la longueur des tronçons de températion (35) est de 50 mm à 1000 mm.

5. Buse de soufflage selon l'une des revendications 1 à 4, **caractérisée en ce que** ledit au moins un tronçon de températion (35) et de préférence lesdits plusieurs tronçons de températion (35) est/sont prévu(s) dans la région de l'agencement formant chambre de répartition (19).

6. Buse de soufflage selon l'une des revendications 1 à 5, **caractérisée en ce que**, dans la direction longitudinale (L) de la buse de soufflage (9) et dans la région de l'agencement formant chambre de répartition (19), il est prévu au moins une paroi intermédiaire ou paroi de séparation (33), par laquelle il se forme perpendiculairement à la direction longitudinale (L) de la buse de soufflage (9) au moins un premier agencement formant chambre de répartition (19') et un second agencement formant chambre de répartition (19") agencé à côté et s'étendant également en direction longitudinale (L) de la buse de soufflage (9).

7. Buse de soufflage selon l'une des revendications 1 à 6, **caractérisée en ce que** l'agencement de déversement entre la chambre d'admission (17) et ladite au moins une chambre de répartition (19) comporte une pluralité d'ouvertures traversantes (27) via lesquelles le gaz de traitement est capable de s'écouler depuis la chambre d'admission (17) jusque dans ladite au moins une chambre de répartition (19).

8. Buse de soufflage selon l'une des revendications 1 à 7, **caractérisée en ce qu'**au moyen de la paroi intermédiaire ou paroi de séparation (33) s'étendant en direction longitudinale (L) de la buse de soufflage (9) et au moyen des parois de séparation (135) s'étendant perpendiculairement à celle-ci, il est formé 2n chambres de répartition en forme de canaux (19, 119) dans lesquelles sont logés respectivement des organes de chauffage séparés (35a), n étant un nombre entier naturel > 0.

9. Buse de soufflage selon l'une des revendications 1 à 8, **caractérisée en ce que** l'organe de chauffage ou les plusieurs organes de chauffage (35a) comprennent ou sont constitués par des boucles de chauffage ou par des tiges de chauffage (35'a).

10. Buse de soufflage selon l'une des revendications 1 à 9, **caractérisée en ce que** l'organe de chauffage ou les plusieurs organes de chauffage (35a) peuvent être chauffés au moyen de divers genres de chauffage, comme avec du gaz, de l'électricité, une huile thermique ou de la vapeur.

11. Buse de soufflage selon l'une des revendications 1 à 10, **caractérisée en ce que** le gaz de traitement est capable de s'écouler perpendiculairement par rapport à la nappe de matériau.

12. Buse de soufflage selon l'une des revendications 1 à 11, **caractérisée en ce que** le gaz de traitement est capable de s'écouler en oblique et/ou parallèlement en direction de la nappe de matériau.

13. Buse de soufflage selon l'une des revendications 1 à 12, **caractérisée en ce que** le gaz de traitement est capable de s'écouler en oblique et/ou parallèlement en sens contraire à la direction de la nappe de matériau.

14. Buse de soufflage selon l'une des revendications 1 à 13, **caractérisée en ce que** la vitesse de soufflage et/ou la pression dynamique au-dessus et/ou au-dessous d'une nappe de matériau est susceptible d'être réglée et/ou régulée au moyen de la buse de soufflage grâce à plusieurs tronçons de températion réglables (35) prévus dans la zone de soufflage, dans le sens d'une réduction d'écarts, tels que bombage, rétraction et module d'élasticité.

15. Installation d'étirage de feuilles de matière plastique comprenant une buse de soufflage selon l'une des revendications 1 à 14.
